Europäisches Patentamt

European Patent Office

Office européen des brevets

(11) Veröffentlichungsnummer: **0 317 896**

**A1**

## (12) EUROPÄISCHE PATENTANMELDUNG

(21) Anmeldenummer: 88119106.8

(22) Anmeldetag: 17.11.88

(51) Int. Cl.⁴: **F21M 7/00 , B60Q 1/04**

(30) Priorität: 21.11.87 DE 3739487

(43) Veröffentlichungstag der Anmeldung:
**31.05.89 Patentblatt 89/22**

(84) Benannte Vertragsstaaten:
**ES FR GB IT SE**

(71) Anmelder: **Hella KG Hueck & Co.**
**Postfach 28 40**
**D-4780 Lippstadt(DE)**

(72) Erfinder: **Bals, Josef**
**Papenbusch 16**
**D-4780 Lippstadt 11(DE)**
Erfinder: **Fierlage, Horst**
**Auf der Klus 15**
**D-4780 Lippstadt(DE)**
Erfinder: **Hegemann, Klaus**
**Schultenstrasse 15**
**D-4780 Lippstadt 12(DE)**
Erfinder: **Raeder, Diethard**
**Neuer Weg 15**
**D-4780 Lippstadt 14(DE)**
Erfinder: **Wystrach, Dieter**
**Schultenstrasse 19**
**D-4780 Lippstadt 12(DE)**

(54) **Scheinwerfer für Kraftfahrzeuge.**

(57) Von dem Reflektor (4) bzw. dem Gehäuse und der Lichtscheibe wird der gegenüber seiner Umgebung abgedichtete Innenraum gebildet. Der Reflektor bzw. das Gehäuse ist aus Kunststoff hergestellt. Der abgedichtete Innenraum (9) des Scheinwerfers weist zumindest ein für Wasserdampf so hoch permeables Wandungsteil (10 bis 12) auf, daß bei einem Luftfeuchtegefälle von der äußeren Umgebung im Bereich des Reflektors (4) bzw. des Gehäuses zur äußeren Umgebung des permeablen Wandungsteils (10 bis 12) die Gewichtsmenge des Wasserdampfs, die in einer bestimmten Zeit durch die gesamte Fläche des permeablen Wandungsteils (10 bis 12) von dem Innenraum des Scheinwerfers nach der Umgebung des permeablen Wandungsteils (10 bis 12) diffundiert, größer oder gleich ist als die Gewichtsmenge des Wasserdampfs, die in einer bestimmten Zeiteinheit durch die gesamte Fläche des Kunststoffreflektors (4) von der äußeren Umgebung im Bereich des Reflektors (4) in den Innenraum des Scheinwerfers diffundiert und durch alle Lecks des Scheinwerfers von der äußeren Umgebung im Bereich des Reflektors (4) durch alle Lecks des Scheinwerfers von dem Motorraum in den Innenraum eindringt.

FIG 2
Schnitt A-A

## Scheinwerfer für Kraftfahrzeuge

Die Erfindung bezieht sich auf einen Scheinwerfer für Kraftfahrzeuge, dessen von dem Reflektor bzw. dem Gehäuse und der Lichtscheibe gebildeter Innenraum gegenüber seiner Umgebung abgedichtet ist und dessen Reflektor bzw. Gehäuse aus Kunststoff hergestellt ist.

Bei den bekannten Scheinwerfern dieser Art kann in seinen Innenraum, der von der Streuscheibe und dem aus Kunststoff hergestellten Gehäuse bzw. Reflektor gebildet wird, sowohl Wasserdampf durch ungewollte Lecks wie z. B. Kapillare, Risse etc., als auch durch die für Wasserdampf permeable Kunststoffwandung des Gehäuses bzw. des Reflektors eindringen. Die im wesentlichen von dem Reflektor bzw. dem Gehäuse gebildete Scheinwerferrückseite ragt in einen, zumindest von oben, abgedeckten Raum des Fahrzeugs hinein. Dies kann z. B. der Kofferraum oder der Motorraum sein. In solchen Räumen verdunstet in der Regel durch äußere Einflüsse wie z. B. die Sonneneinstrahlung Wasser. Im Motorraum tritt bei erwärmten Motor zusätzlich eine Zunahme der Lufttemperatur und somit in der Regel auch eine Zunahme der Luftfeuchte auf. Daher besteht oftmals ein Luftfeuchtegefälle vom Raum des Fahrzeugs zum Innenraum des Scheinwerfers und zu seiner Umgebung hin. Ein Luftfeuchtegefälle in umgekehrter Richtung ist jedoch sehr selten.

Beim Einschalten des Scheinwerfers wird die Luft in seinem Innenraum erwärmt und kann - wenn Lecks vorhanden sind -teilweise nach außen entweichen. Nach dem Ausschalten des Scheinwerfers kann dann feuchte Luft in den Innenraum des Scheinwerfers gesaugt werden. Außerdem erhöht sich nach dem Einschalten des Scheinwerfers, d. h. mit zunehmender Temperatur, die Diffusionsgeschwindigkeit des Wasserdampfs durch die Kunststoffwandungen des Gehäuses bzw. des Reflektors.

In den Innenraum des Scheinwerfers dringt solange Feuchte ein, bis kein Feuchtegefälle mehr vom Raum des Fahrzeugs zum Innenraum des Scheinwerfers besteht. Diese Angleichung der Luftfeuchte dauert einen relativ langen Zeitraum (Stunden bis mehrere Tage). Da bei den bekannten Scheinwerfern eine ausreichende Diffusion zwischen dem Wasserdampf im Innenraum des Scheinwerfers und der Umgebung des Fahrzeugs nicht stattfindet, besteht die Gefahr, daß bei sinkender Temperatur Wasser im Innenraum des Scheinwerfers kondensiert.

Weiterhin kann Feuchtigkeit in den Innenraum des Scheinwerfers durch den häufigen Druckwechsel beim Vorbeifahren an anderen Fahrzeugen, Bäumen, Gehäuden oder dgl. eindringen. Durch diesen Effekt gelangt nicht nur Wasserdampf in den Innenraum des Scheinwerfers, sondern es kann sogar durch größere Lecks elementares Wasser in den Innenraum ·des Scheinwerfers gelangen.

Aufgabe der Erfindung ist es, den im Gattungsbegriff beschriebenen Scheinwerfer derart auszubilden, daß zumindest bei Stillstand des Fahrzeugs der in einer bestimmten Zeiteinheit in den Innenraum des Scheinwerfers eingedrungene Wasserdampf zumindest in der gleichen Zeiteinheit an die Umgebung des Fahrzeugs abgegeben wird, damit zumindest in dieser Zeit die Luftfeuchte im Innenraum des Scheinwerfers reduziert wird, bzw. sich nicht verändert. Diese Aufgabe wird nach der Erfindung dadurch gelöst, daß der abgedichtete Innenraum des Scheinwerfers zumindest ein Wandungsteil aufweist, der für Wasserdampf so hoch permeabel ist, daß bei einem Luftfeuchtegefälle von der äußeren Umgebung im Bereich des Reflektors bzw. des Gehäuses zur äußeren Umgebung des permeablen Wandungsteils hin, folgende Ungleichung erfüllt ist:

$$\sum_{k=1}^{k=q} WDD_{perm\ k} \times A_{perm\ k} > \sum_{i=1}^{i=n} WDD_i \times A_i + 1/t \times \sum_{j=1}^{j=1} m_{leck\ j}$$

Worin $WDD_{perm\ k}$ die Gewichtsmenge des Wasserdampfs in einer Zeiteinheit bei gegebenen Luftfeuchtegefälle und gegebener Temperatur durch eine Flächeneinheit des permeablen Wandungsteils diffundiert (Wasserdampfdurchlässigkeit),

$A_{perm\ k}$ die gesamte Wasserdampfdurchtrittsfläche des permeablen Wandungsteils,

k die laufende Ziffer des permeablen Wandungsteils,

q die Anzahl der verwendeten permeablen Wandungsteile,

$WDD_i$ die Gewichtsmenge des Wasserdampfs, die in einer Zeiteinheit bei gegebenen Luftfeuchtegefälle und gegebener Temperatur durch eine Flächeneinheit des Reflektors bzw. des Gehäuses diffundiert,

Ai Wasserdampfdurchtrittsfläche des Reflektors bzw. des Gehäuses

i die laufende Ziffer der verwendeten Kunststoffteile,

n die Anzahl der verwendeten Kunststoffteile,

t = Zeit

$m_{Leck\,j}$ die Gewichtsmenge des Wasserdampfs, die durch ein Leck in den Innenraum des Scheinwerfers eindringt,

j die laufende Ziffer des Lecks und

l die Anzahl der Lecks ist.

Ein weiterer Vorteil ist es, wenn der für Wasserdampf eine hohe Permeabilität aufweisende Wandungsteil aus einem flexiblen Rohr besteht. Ein solches flexibles Rohr kann bei unterschiedlichsten Platzverhältnissen in der Karosserie des Fahrzeugs leicht und schnell verlegt werden.

Weiterhin ist es vorteilhaft, wenn das permeable Rohr eine solche Werkstoff-Eigenschaft aufweist, daß es sich beim Aufheizen der Luft im Innenraum des Scheinwerfers unter elastischer Verformung aufweitet. Dadurch wird nach dem Abschalten des Scheinwerfers keine Luft und somit mit ihr keine Feuchtigkeit in seinen Innenraum gesaugt.

Vorteilhaft ist es weiterhin, wenn bei in die Karosserieöffnung eingesetzter Scheinwerfer der permeable Wandungsteil zumindest mit seinem größten Bereich hinter Belüftungsöffnungen in der Karosserie angeordnet ist. Dadurch ist der permeable Wandungsteil gegen elementares Wasser, wie z. B. Regen, geschützt angeordnet. Die Belüftungsöffnungen können von einem Bereich des Kühlergrills gebildet werden. Hierbei ist es weiterhin vorteilhaft, wenn der permeable Wandungsteil zumindest mit seinem größten Bereich hinter der unteren Hälfte des Kühlergrills angeordnet ist, da die warme Luft und somit feuchte Luft bei Stillstand des Fahrzeugs durch die obere Hälfte des Kühlergrills nach außen entweicht und die kühlere und somit in der Regel eine niedrigere Luftfeuchte aufweisende Luft durch die untere Hälfte des Kühlergrills in den Motorraum strömt.

Außerdem ist es vorteilhaft, wenn bei in die Karosserieöffnung eingesetzten Scheinwerfer der röhrenförmige Kanal des Rohres mit dem einen Ende mit dem hochliegenden Bereich des Innenraums und mit den anderen Ende mit dem tiefliegenden Bereich des Innenraums verbunden ist. Bei einer solchen Lösung strömt nach dem Einschalten des Scheinwerfers oder nach Sonneneinstrahlung bedingt durch Wärmekonvektion Luft durch den röhrenförmigen Kanal. Dadurch erhöht sich die Temperatur der Wandung des permeablen Rohres und somit auch die Diffusionsgeschwindigkeit des Wasserdampfs durch Wandung des Rohres. Außerdem wird durch die Luftströmung der Wasserdampf vom Innenraum des Scheinwerfers in den röhrenförmigen Kanal transportiert.

Ferner ist es vorteilhaft, wenn das permeable Rohr einen Abschnitt aufweist, der für Wasserdampf keine oder sehr geringe Permeabilität aufweist. Solche Abschnitte sollte das Rohr in den Bereichen aufweisen, in denen eine sehr hohe Luftfeuchte besteht (z. B. im Motorraum).

In den Patentansprüchen 8, 9 und 11 bis 20 sind weitere zweckmäßige Ausführungsformen von Einzelheiten des Scheinwerfers gemäß der Erfindung erläutert.

In der Zeichnung sind mehrere Ausführungsbeispiele der Erfindung dargestellt und zwar zeigt

Figur 1 eine Rückansicht auf einen Scheinwerfer mit einem für Wasserdampf permeablen Rohr,

Figur 2 einen Schnitt nach der Linie A-A durch den Scheinwerfer nach Figur 1, während

Figur 3 eine Teilansicht der Vorderseite eines Kraftfahrzeugs mit einem eingebauten Scheinwerfer, dessen für Wasserdampf permeables Rohr hinter dem Kühlergrill angeordnet ist und

Figur 4 einen vertikalen, mittleren Längsschlitz, durch einen Scheinwerfer mit einem für Wasserdampf permeablen Kasten darstellen.

Die in der Zeichnung dargestellten Scheinwerfer 1, 2, 3 sind jeweils in eine Karosserieöffnung eingesetzt. Die Scheinwerfer 1, 2, 3 bestehen im wesentlichen aus einem aus Kunststoff hergestellten und eine rechteckige Lichtaustrittsöffnung aufweisenden Reflektor (4) und einer das Scheinwerferinnere abdeckenden Lichtscheibe (5). Der eine rechteckige Lichtaustrittsöffnung aufweisende Reflektor (4) weist am Scheitel eine Öffnung auf, die auf der Reflektorrückseite von einem halsförmigen Ansatz umgeben ist. Von der Rückseite des Reflektors (4) her ist in seine Öffnung eine Glühlampe (6) eingesetzt. Auf den halsförmigen Ansatz ist eine Gummikappe (7) aufgesetzt. Der aus Kunststoff hergestellte Reflektor (4) ragt in den Motorraum (8) hinein. Beim Stillstand des Fahrzeugs besteht im Motorraum (8) besonders nach einer längeren Fahrzeit eine hohe Luftfeuchte auf, da kein Fahrtwind durch den Motorraum strömt. Aus diesem Grund besteht in der Regel im Motorraum (8) eine wesentlich höhere Luftfeuchte als im Innenraum (9) des Scheinwerfers und in der Umgebung (17) des Fahrzeugs. Da die Kunststoffwandung des Reflektors (4) für Wasserdampf im geringen Maße permeabel ist, dringt bei einem Luftfeuchtegefälle vom Motorraum (8) zum Innenraum (9) des Scheinwerfers hin Wasserdampf in den Innenraum (9) ein. Außerdem dringt Wasserdampf durch ungewollte Lecks in den Innenraum (9) ein. Der in den Innenraum (9) eingedrungene

3

Wasserdampf permeiert bei den Scheinwerfern 1, 2, 3 durch eine für Wasserdampf eine hohe Permeabilität aufweisendes Wandungsteil 10, 11 bzw. 12 nach außen. Dieser für Wasserdampf permeable Wandungsteil (10, 11 bzw. 12) ist hinter den in die Karosserie eingebrachten Belüftungsöffnungen (14, 15 bzw. 16) angeordnet, damit die Luftfeuchte der Umgebung (18) des permeablen Wandungsteils (10, 11 bzw. 12) kleiner ist als die Luftfeuchte im Innenraum (9) des Scheinwerfers. Dieser Wandungsteil (10, 11 bzw. 12) ist für Wasserdampf so hoch permeabel, daß die Gewichtsmenge des Wasserdampfs, die in einer bestimmten Zeit durch die gesamte Fläche des permeablen Wandungsteils (10, 11 bzw. 12) von dem Innenraum (9) des Scheinwerfers nach der Umgebung (18) des permeablen Wandungsteils diffundiert größer oder gleich ist als die Gewichtsmenge des Wasserdampfs, die in der bestimmten Zeiteinheit durch die gesamte Fläche des Kunststoffreflektors von den Motorraum (8) in den Innenraum (9) des Scheinwerfers diffundiert und durch alle Lecks des Scheinwerfers von dem Motorraum (8) in den Innenraum (9) eindringt.

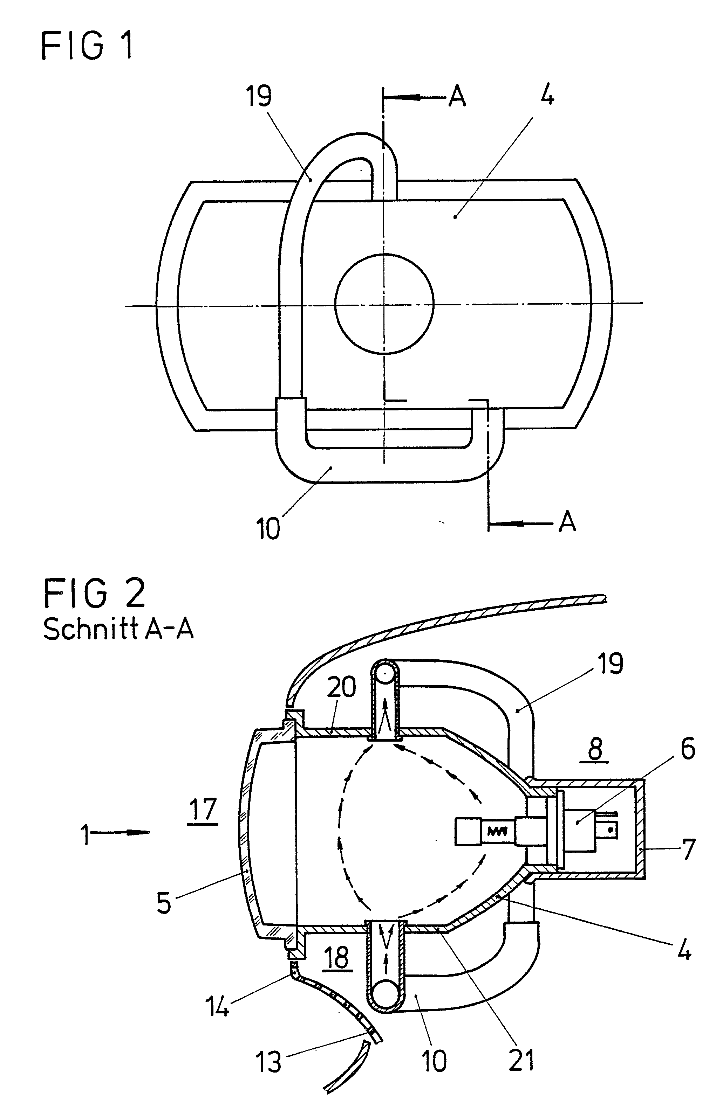

Der in den Figuren 1 und 2 dargestellte Scheinwerfer (1) weist ein flexibles Rohr (10, 19) auf, daß mit einem Ende in eine Öffnung der oberen Abflachung (20) des rechteckigen Reflektors (4) und mit dem anderen Ende (4) in eine Öffnung der unteren Abflachung (21) des Reflektors (4) eingesetzt ist. Das flexible Rohr (10, 19) verläuft von der oberen Abflachung (20) über die Rückseite des Scheinwerfers zur unteren Abflachung (21) hin und verläuft unterhalb der Abflachung (21) mit dem Abschnitt (10) in der Nähe der Belüftungsöffnungen (14) in der Karosserie (13). Der Abschnitt (10) ist für Wasserdampf hoch permeabel, während der über die Rückseite verlaufende Abschnitt (19) des Rohres für Wasserdampf nicht permeabel ist. Bei einem solchen Scheinwerfer erhöht sich die Diffusionsgeschwindigkeit des Wasserdampfs durch den permeablen Abschnitt (10) des Rohres, wenn bedingt durch äußere Einflüsse, wie z. B. Sonneneinstrahlung oder nach dem Einschalten des Scheinwerfers Luft durch den Kanal des Rohres strömt. Dabei nimmt die Temperatur des permeablen Rohres zu und durch die Luftströmung wird der Wasserdampf aus dem Innenraum des Scheinwerfers in den Kanal des Rohres transportiert. Die Richtung der Luftströmung ist in Figur 2 durch Pfeile angegeben. Ferner weist das Rohr (10, 19) eine so große lichte Weite auf, daß auch in den Zeiten in denen keine Luft durch den Kanal strömt eine ausreichende schnelle Diffusionsgeschwindigkeit des Wasserdampfs zwischen dem Innenraum des Scheinwerfers und dem Kanal des Rohres besteht.

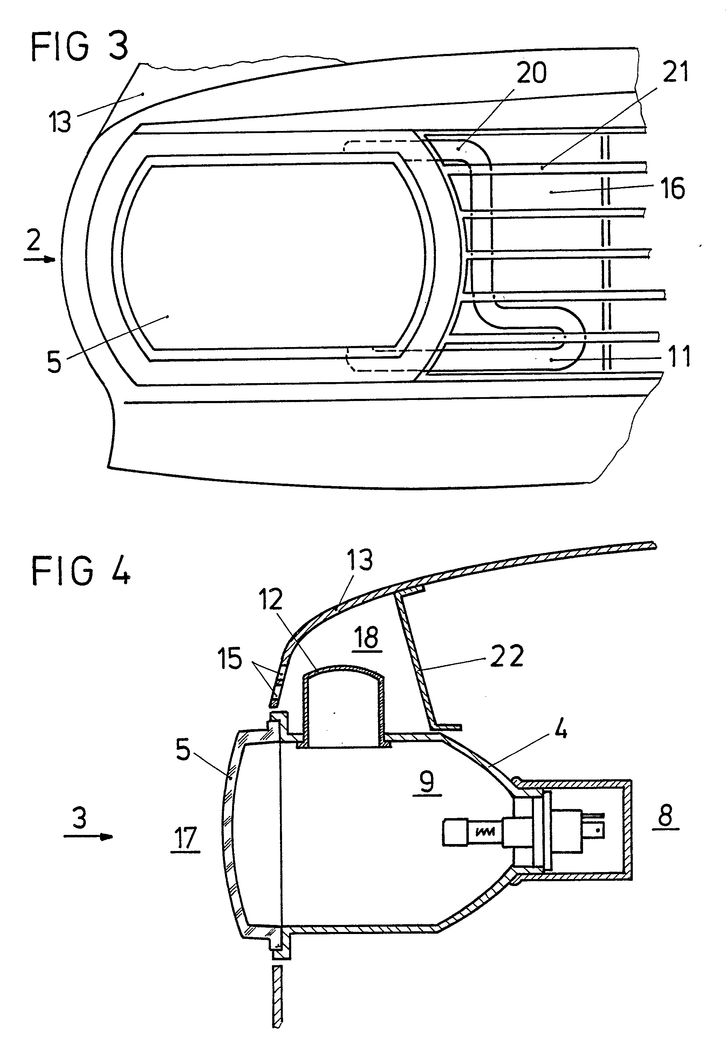

Den in Figur 3 der Zeichnung dargestellte Scheinwerfer (2) weist ein flexibles Rohr (11, 20) auf, das mit dem einem Ende an einem höheren Bereich des Reflektors und mit dem anderen Ende an einem tieferliegenden Bereich des Reflektos befestigt ist. Das flexible Rohr (11, 20) ist hinter dem Kühlergrill (21) des Fahrzeugs angeordnet. Dabei besteht der hinter der unteren Hälfte des Kühlergrills (21) angeordnete Abschnitt (11) des Rohres aus einem für Wasserdampf hoch permeablen Werkstoff, während der hinter der oberen Hälfte des Kühlergrills (21) angeordnete Abschnitt (20) des Rohres für Wasserdampf nicht permeabel ist. Der für Wasserdampf hoch permeable Abschnitt (11) des Rohres verläuft hinter dem unteren Bereich des Kühlergrills in einer Schleife.

In Figur 4 ist der Scheinwerfer (3) dargestellt, dessen Reflektor (4) in der oberen Abflachung eine Öffnung aufweist, in die ein aus mehreren permeablen Wandungsteilen (12) bestehender Kasten eingesetzt ist. Der Kasten ist mit seinen umlaufenden Rand an dem Rand der Öffnung des Reflektors (4) festgesetzt. Dabei ist sein Inneres dem Scheinwerfer-Innenraum zugewandt. Damit der für Wasserdampf permeable Kasten vor der hohen Luftfeuchte im Motorraum (8) abgeschirmt ist, ist zwischen dem Kasten und dem Motorraum eine an der Karosserie befestigte Wandung (22) aus Blech angeordnet. Oberhalb des Scheinwerfers sind in die Nähe des für Wasserdampf permeablen Kastens Belüftungsöffnungen (15) eingebracht. Ein solcher für Wasserdampf permeable Kasten kann auch an der unteren Abflachung des Reflektors befestigt werden.

## Ansprüche

1. Scheinwerfer für Kraftfahrzeuge, dessen von dem Reflektor bzw. dem Gehäuse und der Lichtscheibe gebildete Innenraum gegenüber seiner Umgebung abgedichtet ist und dessen Reflektor bzw. Gehäuse aus Kunststoff hergestellt ist, dadurch gekennzeichnet, daß der abgedichtete Innenraum (9) des Scheinwerfers zumindest ein Wandungsteil (10, 11 bzw. 12) aufweist, der für Wasserdampf so hoch permeabel ist, daß bei einem Luftfeuchtegefälle von der äußeren Umgebung im Bereich des Reflektors (4) bzw. des Gehäuses zur äußeren Umgebung des permeablen Wandungsteils (10, 11 bzw. 12) hin folgende Ungleichung erfüllt ist:

$$\sum_{k=1}^{k=q} WDD_{perm\ k} \times A_{perm\ k} > \sum_{i=1}^{i=n} WDD_i \times A_i + 1/t \times \sum_{j=1}^{j=1} m_{leck\ j}$$

worin WDD$_{perm\ k}$ die Gewichtsmenge des Wasserdampfs, die in einer Zeiteinheit bei gegebenen Luftfeuchtegefälle und gegebener Temperatur durch eine Flächeneinheit des permeablen Wandungsteils diffundiert (Wasserdampfdurchlässigkeit),

A$_{perm\ k}$ die gesamte Wasserdampfdurchtrittsfläche des permeablen Wandungsteils,

k die laufende Ziffer des permeablen Wandungsteils,

q die Anzahl der verwendeten permeablen Wandungsteile,

WDD$_i$ die Gewichtsmenge des Wasserdampfs, die in einer bestimmten Zeiteinheit bei gegebenen Luftfeuchtegefälle und gegebener Temperatur durch eine Flächeneinheit des Reflektors bzw. des Gehäuses diffundiert,

Ai Wasserdampfdurchtrittsfläche des Reflektors bzw. des Gehäuses

i die laufende Ziffer der verwendeten Kunststoffteile,

n die Anzahl der verwendeten Kunststoffteile,

t = Zeit

m$_{Leck\ j}$ die Gewichtsmenge des Wasserdampfs, die durch ein Leck in den Innenraum des Scheinwerfers eindringt,

j die laufende Ziffer des Lecks und

l die Anzahl der Lecks ist.

2. Scheinwerfer durch Anspruch 1, dadurch gekennzeichnet, daß der für Wasserdampf eine hohe Permeabilität aufweisende Wandungsteil (10 bzw. 11) aus einem flexiblen Rohr besteht.

3. Scheinwerfer nach Anspruch 2, dadurch gekennzeichnet, daß das permeable Rohr (10 bwz. 11) eine solche Werkstoff-Eigenschaft aufweist, daß es sich beim Aufheizen der Luft im Innenraum (9) des Scheinwerfers und elastischer Verformung aufweitet.

4. Scheinwerfer nach einem der vorstehenden Ansprüche, dadurch gekennzeichnet, daß bei in die Karosserieöffnung eingesetzten Scheinwerfer der permeable Wandungsteil (10, 11 bzw. 12) zumindest mit seinem größten Bereich hinter Belüftungsöffnungen (14, 15 bzw. 16) in der Karosserie angeordnet ist.

5. Scheinwerfer nach Anspruch 4, dadurch gekennzeichnet, daß die Belüftungsöffnungen (14) unterhalb der Karosserieöffnung für den Scheinwerfer in die Karosserie (13) eingebracht sind.

6. Scheinwerfer nach Anspruch 4, dadurch gekennzeichnet, daß die Belüftungsöffnungen (16) von einem Bereich des Kühlergrill gebildet werden.

7. Scheinwerfer nach Anspruch 6, dadurch gekennzeichnet, daß bei in die Karosserieöffnung eingesetzten Scheinwerfer der permeable Wandungsteil (11) zumindest mit seinem größten Bereich hinter der unteren Hälfte des Kühlergrills (21) angeordnet ist.

8. Scheinwerfer nach einem der vorstehenden Ansprüche, dadurch gekennzeichnet, daß der rohrförmige Kanal des permeablen Rohres mit seinem einen Ende mit dem Innenraum des Scheinwerfers verbunden ist, während sein anderes Ende gegenüber seiner Umgebung abgedichtet ist.

9. Scheinwerfer nach einem der vorstehenden Ansprüche, dadurch gekennzeichnet, daß der röhrenförmige Kanal des permeablen Rohres (10 bzw. 11) mit beiden Ende mit dem Innenraum des Scheinwerfers verbunden sind.

10. Scheinwerfer nach Anspruch 9, dadurch gekennzeichnet, daß bei in die Karosserieöffnung eingesetzten Scheinwerfern der röhrenförmige Kanal des Rohres (10 bzw. 11) mit dem einen Ende mit dem hochliegenden Bereich des Innenraums (9) und mit dem anderen Ende mit dem tiefliegenden Bereich des Innenraums (9) verbunden ist.

11. Scheinwerfer nach einem der vorstehenden Ansprüche, dadurch gekennzeichnet, daß das permeable Rohr einen Abschnitt (20) aufweist, der für Wasserdampf keine oder sehr geringe Permeabilität aufweist.

12. Scheinwerfer nach einem der vorstehenden Ansprüche, dadurch gekennzeichnet, daß der permeable Wandungsteil mit dem Reflektor bzw. Gehäuse verklebt oder verschweißt ist.

13. Scheinwerfer nach einem der vorstehenden Ansprüche, dadurch gekennzeichnet, daß eine für die Reflexion der Lichtstrahlen unwirksame Wandung des Reflektors aus einem für Wasserdampf permeablen Wandungsteil (12) besteht.

14. Scheinwerfer nach einem der vorstehenden Ansprüche, dadurch gekennzeichnet, daß zum Innenraum (9) des Scheinwerfers ein aus mehreren für Wasserdampf permeablen Wandungsteilen (12) bestehender Kasten geöffnet ist.

15. Scheinwerfer nach einem der vorstehenden Ansprüche, dadurch gekennzeichnet, daß das permeable Rohr (10 bzw. 11) eine so große lichte Weite aufweist, daß bei einem Luftfeuchtegefälle vom Innenraum (9) des Scheinwerfers zu der Umgebung des Rohres und wenn durch den röhrenförmigen Kanal des Rohres keine Luft strömt, zumindest eine ausreichend schnelle Diffusion des Wasserdampfes zwischen dem Innenraum (9) des Scheinwerfers und dem röhrenförmigen Kanal des Rohres stattfindet.

16. Scheinwerfer nach einem der vorstehenden Ansprüche, dadurch gekennzeichnet, daß der Reflektor bzw. das Gehäuse zusätzlich zum permeablen Wandungsteil eine weitere durch ein Labyrinth gegen Schmutz- und Spritzwasser geschützte Belüftungsöffnung bzw. Wasserablauföffnung aufweist.

17. Scheinwerfer nach Anspruch 16, dadurch gekennzeichnet, daß die Belüftungsöffnung in dem Bereich des permeablen Wandungsteils angeordnet ist.

18. Scheinwerfer nach einem der vorstehenden Ansprüche, dadurch gekennzeichnet, daß der permeable Wandungsteil z. B. von einem Teil des Kühlergrills, eines die Lichtscheibe umgebenden Zierrahmens der Stoßstange, etc. gebildet wird.

19. Scheinwerfer nach einem der vorstehenden Ansprüche, dadurch gekennzeichnet, daß das permeable Rohr zumindest teilweise innerhalb der Stoßstange verläuft.

20. Scheinwerfer nach einem der vorstehenden Ansprüche, dadurch gekennzeichnet, daß bei einem in das Kraftfahrzeug eingebauten Scheinwerfer eine mit dem Scheinwerfer und/oder mit der Karosserie verbundene Wandung (23) die äußere Umgebung (18) des permeablen Wandungsteils (12) von dem Raum (8) des Fahrzeugs trennt, in der der Reflektor (4) bzw. das Gehäuse hineinragt.

# FIG 1

19    A    4

10

A

# FIG 2
Schnitt A-A

20    19

8    6

17    7

1

5    4

18

14

13    10    21

FIG 3

FIG 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-2 183 934 (WESTFÄLISCHE METALL INDUSTRIE KG) * Figuren 1,2 * ----- | 1 | F 21 M 7/00 B 60 Q 1/04 |
| | | | **RECHERCHIERTE SACHGEBIETE (Int. Cl.4)** |
| | | | F 21 M B 60 Q F 21 V |

**Der vorliegende Recherchenbericht wurde für alle Patentansprüche erstellt**

| Recherchenort | Abschlußdatum der Recherche | Prüfer |
|---|---|---|
| DEN HAAG | 24-02-1989 | ONILLON C.G.A. |